# EUROPÄISCHE PATENTSCHRIFT

(11) **EP 1 667 048 B1**
(45) Veröffentlichungstag und Bekanntmachung des Hinweises auf die Patenterteilung: **25.03.2009**
(21) Anmeldenummer: 05025823.5
(22) Anmeldetag: 25.11.2005
(51) Int. Cl.: G06K 7/10, A01K 11/00

(54) **Tiererkennungsvorrichtung mit einer Antennenanordnung**
animal recognition apparatus with an antenna apparatus
dispositif d'identification d'animaux avec un dispositif d'antenne

(30) Priorität: 01.12.2004 DE 102004058068
(43) Veröffentlichungstag der Anmeldung: 07.06.2006
(73) Patentinhaber: GEA WestfaliaSurge GmbH, 59199 Bönen (DE)
(72) Erfinder: Pohlkamp, Manfred, 59302 Oelde (DE); Teckentrup, Rolf, 33334 Gütersloh (DE); Gerke, Martin, 59494 Soest (DE)
(74) Vertreter: Neumann, Ditmar

(56) Entgegenhaltungen:
- EP-A- 0 748 586
- WO-A-20/04026025
- US-A- 6 166 637
- US-A1- 2003 229 647

## Beschreibung

Der Gegenstand der vorliegenden Erfindung bezieht sich auf eine Tiererkennungsvorrichtung mit einer Antennenanordnung zum Senden und/oder Empfangen eines Signals zu einem bzw. von einem Transponder, der von einem Tier getragen wird.

Zur Identifikation von Tieren, insbesondere in Milchviehaltungsbetrieben werden elektronische Systeme verwendet. Die zu identifizierenden Tiere sind mit Identifikationsmitteln ausgestattet. Gewöhnlich handelt es sich hierbei um Transponder. Die Transponder können beispielsweise als Ohrmarken an Tieren befestigt sein. Es ist auch bekannt, dass Identifizierungsmittel subkutan implantiert werden. Darüber hinaus ist bekannt, dass Identifizierungs-Transponder in das Verdauungssystem des Tieres eingesetzt werden.

Bei den Transpondern kann es sich um passive oder aktive Transponder handeln. Passive Transponder verfügen über keine eigene Energiequelle. Solche Transponder erhalten induzierte elektrische Energie durch Empfangen geeigneter elektromagnetischer Energie, die durch eine Antenne emittiert wird, die an den Positionen angebracht sind, an denen eine Identifikation erreicht werden soll.

Es ist daher bekannt, dass Antennen beispielsweise im Bereich eines Fütterungsplatzes, einer Melkstation, einer Wiegestation vorgesehen werden. Die Identifikation von Tieren dient auch zur Sortierung von Tieren, so dass Antennen auch im Bereich von Sortiereinrichtungen angeordnet werden. In Abhängigkeit vom Aufbau des Transponders kann dieser auch eine Mehrzahl von unterschiedlichen Signalinhalten übermitteln. Hierbei kann es sich beispielsweise um ein Identifikationssignal und/oder Signale, die im Zusammenhang mit den physischen Eigenschaften des Tieres stehen, handeln. So sind beispielsweise Transponder bekannt, die auch die Temperatur des Tieres übermitteln. Zur Brunsterkennung bei Milch abgebenden Tieren wird auch die Aktivität des Tieres bestimmt und mittels des Transponders als Signal an die Antenne übermittelt.

Aktive Transponder verfügen über eigene Energiequellen, so dass diese Transponder die entsprechenden Signale, ohne dass Energie induziert wird an die Antenne übermitteln können.

Zum Senden und/oder Empfangen eines Signals zu einem bzw. von einem Transponder der von einem Tier getragen wird, werden Antennenanordnungen verwendet. Solche Antennenanordnungen sind beispielsweise durch die WO 97/32468, durch die US 6166637, oder durch die WO 97/08646 bekannt. Die WO 97/32468 beschreibt eine Antennenanordnung mit zwei Antennen, die im Wesentlichen U-förmig ausgebildet sind. Sie weisen jeweils zwei vertikal verlaufende Abschnitte auf, die durch einen horizontal verlaufenden Verbindungsabschnitt miteinander verbunden sind. Diese Antennen sind benachbart zum Durchgang, durch den die Tiere geführt werden, positioniert.

Problematisch bei derartigen Antennen ist, dass die Position eines Transponders hinsichtlich der Orientierung, der Höhe und dem Abstand zur Antenne erheblichen Schwankungen unterliegen kann. Hierdurch bedingt kann es zu Schwierigkeiten bei der Tieridentifikation kommen. Dieses Problem kann noch verschärft auftreten, wenn eine Identifikation im Durchlauf erfolgen soll.

Der vorliegenden Erfindung liegt die Aufgabe zu Grunde, eine Tiererkennungsvorrichtung mit einem Durchgang und einer im Bereich des Durchgangs angeordneten Antennenanordnung zum Aussenden und/oder Empfangen eines Signals zu einem bzw. von einem Transponder, der von einem Tier getragen wird, so weiter zu bilden, dass ein zuverlässigerere Tiererkennung bzw. Tieridentifikation erreicht wird.

Diese Aufgabe wird erfindungsgemäß durch eine Tiererkennungsvorrichtung mit den Merkmalen des Anspruchs 1 erreicht. Vorteilhafte Weiterbildungen und Ausgestaltungen der Tiererkennungsvorrichtung sind Gegenstand der abhängigen Ansprüche.

Die erfindungsgemäße Vorrichtung weist einen Durchgang und eine im Bereich des Durchgangs angeordnete Antennenanordnung auf. Die Antennenanordnung dient zum Aussenden und/oder Empfangen eines Signals zu einem bzw. von einem Transponder der von einem Tier getragen wird. Die Antennenanordnung weist wenigstens eine Antenne auf Diese Antenne hat wenigstens ein Paar von im Abstand zueinander und miteinander verbundene, in einer gemeinsamen Fläche liegende Abschnitte. Die Anordnung der Abschnitte ist so gewählt, dass in einer Längsrichtung der Abschnitte betrachtet ein Abstand zwischen den Abschnitten veränderlich ist. Durch diese erfindungsgemäße Tiererkennungsvorrichtung wird die Erkennungssicherheit erhöht, da durch die Antenne ein inhomogenes Feld bereit gestellt wird, so dass auch Transponder die ungünstig orientiert sind, auch erkannt werden. Die erfindungsgemäße Tiererkennungsvorrichtung führt insbesondere bei einer Durchlauferkennung zu höheren Erkennungsquoten. Bei den Tieren, die mit einem Transponder versehen werden, kann es sich um Kühe, Büffel, Dromedare, Stuten oder kleinere Milch abgebende Tiere wie insbesondere Schafe oder Ziegen handeln. Die erfindungsgemäße Tiererkennungsvorrichtung eignet sich besonders zur Erkennung von Transpondern, die von Schafen oder Ziegen getragen werden.

Bei der Tiererkennungsvorrichtung sind die Abschnitte in einer im wesentlichen vertikalen Fläche des Durchgangs angeordnet . Die Abschnitte erstrecken sich vorzugsweise bis in Bodennähe des Durchgangs, so dass auch Tiere, die beispielsweise ein Transponder als Ohrmarke haben, beim gesenkten Kopf erkannt werden.

Gemäß einer noch weiteren vorteilhaften Ausgestaltung der Tiererkennungsvorrichtung wird vorgeschlagen, dass das wenigstens eine Paar so ausgebildet ist, dass der Abstand der Abschnitte von einem Boden des Durchgangs nach oben hin zunimmt.

Bevorzugt ist eine Tiererkennungsvorrichtung, bei der wenigstens ein Abschnitt an einer Seite des Durchgangs angebracht ist. Es besteht auch die Möglichkeit, dass beidseits des Durchgangs eine Antenne oder jeweils eine Antenne vorgesehen sind.

Nach einer noch weiteren bevorzugten Ausgestaltung der Tiererkennungseinrichtung wird vorgeschlagen, dass sich der Abstand in Längsrichtung der Abschnitte über wenigstens eine Teillänge der Abschnitte stetig verändert. Besonders bevorzugt ist dabei eine Ausgestaltung der Tiererkennungseinrichtung, bei der wenigstens eine der Abschnitte im Wesentlichen geradlinig ausgebildet ist.

Um die Erkennungssicherheit bzw. die Erkennungsquote noch weiter zu verbessern, wird nach einer noch weiteren vorteilhaften Ausgestaltung der Tiererkennungseinrichtung vorgeschlagen, dass in wenigstens einer gemeinsamen Fläche mindestens zwei Paare von in Abstand zueinander und miteinander verbundene Abschnitte vorgesehen sind. Hierdurch wird die Erkennungsquote noch weiter verbessert. Die Antenne kann durch wenigstens eine Spule gebildet sein.

Die erfindungsgemäße Tiererkennungsvorrichtung weist noch weitere zahlreiche Vorteile auf. Sie ist geeignet zur Erkennung von Milch abgebenden Tieren, bei denen es sich z. B. um Kühe, Ziegen, Schafe, Stuten, Dromedare, Yaks oder dergleichen handeln kann.

Die Tiererkennungsvorrichtung kann mit einer entsprechenden Steuer- und Regeleinrichtung einer Melkvorrichtung verbunden sein. Insbesondere wird vorgeschlagen, dass die von der Tiererkennungsvorrichtung ermittelten Daten an ein Herdenmanagementsystem übermittelt werden.

Weitere Vorteile und Einzelheiten der Erfindung werden an Hand der in der Zeichnung dargestellten Ausführungsbeispiele erläutert, ohne dass der Gegenstand der Erfindung auf diese Konkreten Ausführungsbeispiele beschränkt wird.

Es zeigen:
- Figur 1: in einer perspektivischen Ansicht eine erste Ausführungsform einer Antennenanordnung,
- Figur 2: die Antennenanordnung nach Figur 1 in einer Seitenansicht,
- Figuren 3 bis 6: unterschiedliche Ausführungsformen einer Antennenanordnung,
- Figur 7: eine Tiererkennungsvornchtung in einer Vorderansicht und
- Figur 8: die Tiererkennungsvornchtung nach Figur 7 in einer Seitenansicht.

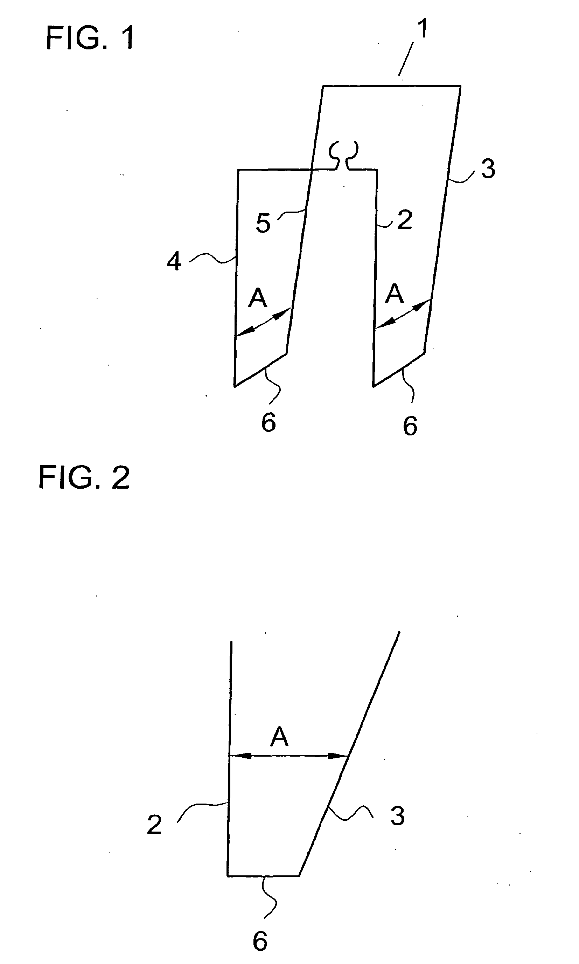

In der Figur 1 ist schematisch und perspektivisch eine Antennenanordnung zum Senden und/oder Empfangen eines Signals zu einem bzw. von einem Transponder, der von einem Tier getragen wird, dargestellt. Die Antennenanordnung weist eine Antenne 1 auf. In dem dargestellten Ausführungsbeispiel weist die Antenne ein erstes Paar von in Abstand zueinander und miteinander verbundenen, in einer gemeinsamen Fläche liegenden Abschnitte 2, 3 auf. Die Abschnitte 2, 3 sind in dem dargestellten Ausführungsbeispiel durch einen im Wesentlichen waagerecht verlaufenden Abschnitt 6 verbunden. In Längsrichtung der Abschnitte betrachtet verändert sich der Abstand zwischen den Abschnitten 2, 3. Vom waagerechten Abschnitt 6 aus gesehen, nimmt der Abstand in Längsrichtung der Abschnitte 2, 3 zu.

In einer zu der Fläche, in der die Abschnitte 2, 3 liegen, parallelen Fläche sind zwei Abschnitte 4, 5 vorgesehen. Auch die Abschnitte 4, 5 sind durch einen im Wesentlichen waagerecht verlaufenden Abschnitt 6 miteinander verbunden. Die Abschnitte 4, 5 bilden ein zweites Paar von Abschnitten der Antenne 1. Die Antenne 1 ist im Wesentlichen symmetrisch ausgebildet. Durch die Abschnitte 2, 3, die in dem dargestellten Ausführungsbeispiel geneigt zueinander sind, wird ein inhomogenes Feld erzeugt.

Der Abstand A in Längsrichtung der Abschnitte verändert sich stetig. Die Abschnitte 2 bis 5 sind in dem dargestellten Ausführungsbeispiel im Wesentlichen geradlinig ausgebildet. Dies ist nicht zwingend notwendig.

Die Antenne 1 ist durch eine Spule gebildet. es besteht auch die Möglichkeit, dass die Antenne durch eine Mehrzahl von Spulen gebildet ist. Bevorzugt ist bei einer solchen Ausgestaltung eine gleichsinnige Wicklung der Spulen.

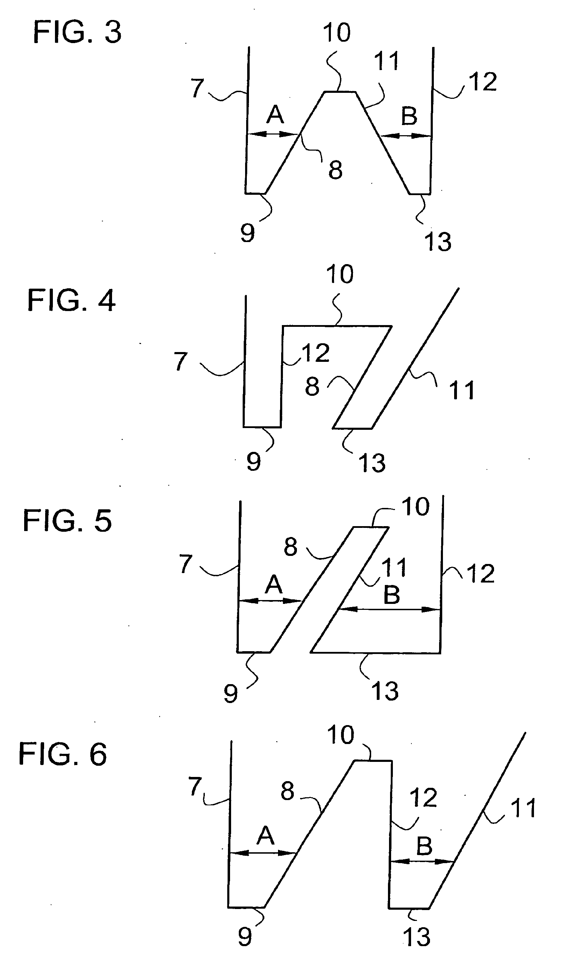

Die erfindungsgemäße Antennenanordnung ermöglicht zahlreiche unterschiedliche Konfigurationen. Beispielhaft sind einige mögliche Konfigurationen der Antennenanordnung in den Figuren 3 bis 6 dargestellt.

Figur 3 zeigt eine Antenne in einer Konfiguration, in der zwei Paare von Abschnitten vorgesehen sind. Das erste Paar wird durch die Abschnitte 7, 8 gebildet, wobei die Abschnitte 7, 8 in Längsrichtung der Abschnitte betrachtet einen Abstand A aufweisen, der veränderlich ist. Die Abschnitte 7, 8 sind durch einen Abschnitt 9 miteinander verbunden. In dem dargestellten Ausführungsbeispiel verläuft der Abschnitt 7 im Wesentlichen senkrecht, wobei der Abschnitt 8 gegenüber einer Senkrechten geneigt ist.

Das zweite Paar ist durch die Abschnitte 11, 12 gebildet. Auch bei den Abschnitten 11, 12 verändert sich der Abstand. Von einem Abschnitt 13, der die Abschnitte 11, 12 verbindet, aus betrachtet, nimmt der Abstand B zu. Die Darstellung nach Figur 3 zeigt, dass der Abschnitt 12 im Wesentlichen senkrecht verläuft, wobei der Abschnitt 11 zum Abschnitt 8 hin geneigt ist. Die Neigungswinkel des ersten Paares und des zweiten Paares sind unterschiedlich. Das erste Paar und zweite Paar bzw. der Abschnitt 8 und der Abschnitt 11 sind durch einen Abschnitt 10 miteinander verbunden.

Es ist nicht zwingend notwendig, dass die Abschnitte 7 und 12 im Wesentlichen senkrecht verlaufen. Auch diese können gegenüber einer Vertikalen geneigt sein, wenn die Antenne in einer vertikalen Fläche positioniert ist. Die Antennenanordnung kann so ausgestaltet sein, dass diese beispielsweise V- oder W-förmig ausgebildet ist.

Figur 4 zeigt eine noch weitere Ausführungsform einer Antennenanordnung. Bei dieser Ausführungsform sind zwei Paare von Abschnitten dargestellt. Ein erstes Paar ist gebildet durch die Abschnitte 7, 8, während das zweite Paar durch die Abschnitte 11, 12 gebildet sind. Hierbei sind die Paare versetzt zueinander ausgebildet. Figur 4 zeigt eine Ausgestaltung, bei der die Abschnitte 7, 12 und die Abschnitte 8 und 11 jeweils im Wesentlichen parallel zueinander verlaufen, was jedoch nicht zwingend notwendig ist.

Eine noch weitere Ausführungsform einer Antenne ist in der Figur 5 dargestellt. Es sind Abschnitte 7, 8 vorgesehen, bei denen der Abstand A von einem Abschnitt 9 aus betrachtet in Längsrichtung des Abschnitts 7 zunimmt, während der Abstand B des Paares der Abschnitte 11, 12 von einem Abschnitt 13 aus in Längsrichtung des Abschnitts 12 abnimmt.

Figur 6 zeigt eine Sägezahnförmige Ausgestaltung einer Antenne. Der Verlauf der Abstände A, B der Paare ist vorzugsweise gleich, so dass die Antenne im Wesentlichen symmetrisch aufgebaut ist.

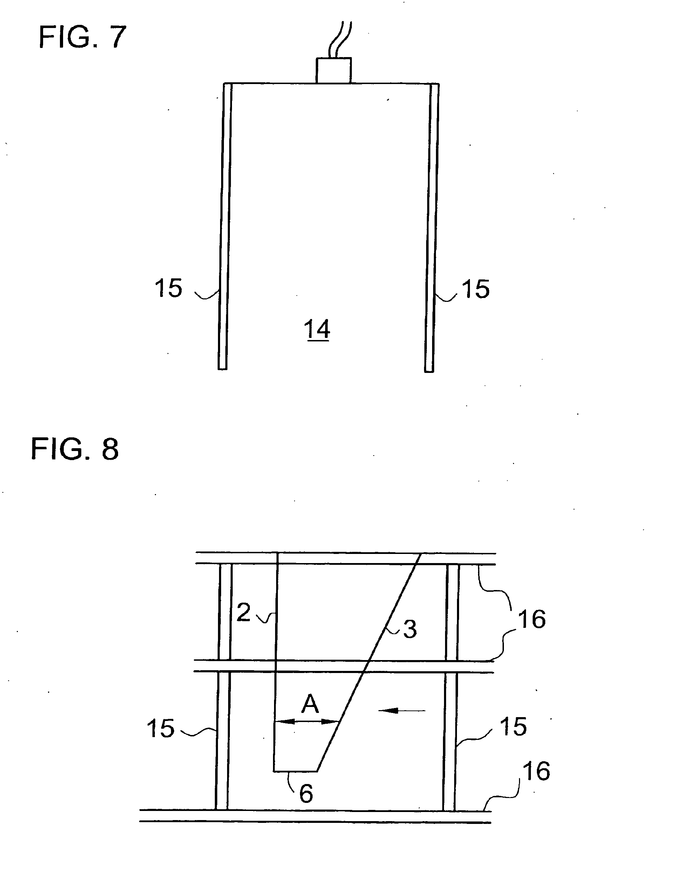

Figuren 7 und 8 zeigen schematisch eine Tiererkennungsvorrichtung mit einem Durchgang 14. Der Durchgang 14 ist durch ein aus Streben 15, 16 gebildetes, insbesondere ein nichtmetallisches, Gerüst seitlich begrenzt. An dem Gerüst ist eine Antennenandordnung zum Aussenden und/oder empfangen eines Signals zu einem bzw. von einem Transponder, der von einem nicht dargestellten Tier getragen wird, vorgesehen. Die Antennenanordnung weist eine Antenne 1 auf, die entsprechend der Ausgestaltung nach Figur 1 aufgebaut ist. Bei der Durchführung von Tieren in Richtung des Pfeils der Figur 8 wird eine Tiererkennung durchgeführt.

### BEZUGSZEICHENLISTE

- 1: Antenne
- 2 bis 13: Abschnitt
- 14: Durchgang
- 15, 16: Streben

## Patentansprüche

1. Tiererkennungsvorrichtung mit einem Durchgang (14) und einer im Bereich des Durchgangs (14) angeordneten Antennenanordnung, zum Aussenden und/oder Empfangen eines Signals zu einem beziehungsweise von einem Transponder, der von einem Tier getragen wird, wobei die Antennenanordnung wenigstens eine Antenne (1) aufweist, die wenigstens ein Paar von im Abstand zueinander und miteinander verbundenen, in einer gemeinsamen Fläche liegende Abschnitte (2, 3; 4, 5; 7, 8; 11, 12) hat,
**dadurch gekennzeichnet, dass** in einer Längsrichtung einer der Abschnitte (2, 3; 4, 5; 7, 8; 11, 12) und in Längsrichtung des Durchganges (14) betrachtet ein Abstand (A, B) zwischen den Abschnitten (2, 3; 4, 5; 7, 8; 11, 12) veränderlich ist, wobei die Abschnitte (2, 3, 4, 5, 7, 8, 11, 12) in einer im wesentlichen vertikalen Fläche des Durchganges (14) angeordnet sind.

2. Tiererkennungsvorrichtung nach Anspruch 1, **dadurch gekennzeichnet, dass** wenigstens ein Paar von Abschnitten (2, 3, 4, 5, 7, 8, 11, 12) vorgesehen ist, bei dem der Abstand (A) von einem Boden des Durchgangs (14) nach oben hin zunimmt.

3. Tiererkennungsvorrichtung nach Anspruch 1, oder 2, **dadurch gekennzeichnet, dass** wenigstens ein Abschnitt (2, 3) an einer Seite des Durchgangs (14) angebracht ist.

4. Tiererkennungsvorrichtung nach einem oder mehreren vorhergehenden Ansprüchen 1 bis 3, **dadurch gekennzeichnet, dass** sich der Abstand (A) in Längsrichtung einer der Abschnitte (2, 3) über wenigstens eine Teillänge der Abschnitte (2, 3) stetig verändert.

5. Tiererkennungsvorrichtung nach einem der Ansprüche 1 bis 4, **dadurch gekennzeichnet, dass** wenigstens einer der Abschnitte (2, 3) im wesentlichen gradlinig ausgebildet ist.

6. Tiererkennungsvorrichtung nach einem der Ansprüche 1 bis 5, **dadurch gekennzeichnet, dass** in wenigstens einer gemeinsamen Fläche mindestens zwei Paare von im Abstand zueinander und miteinander verbundenen Abschnitte vorgesehen sind.

7. Tiererkennungsvorrichtung nach Anspruch 6, **dadurch gekennzeichnet, dass** in der jeweiligen Fläche wenigstens ein Paar vorgesehen ist, bei dem der Abstand der Abschnitte verschieden vom Abstand der Abschnitte wenigstens eines anderen Paares ist.

8. Tiererkennungsvorrichtung nach einem oder mehreren vorhergehenden Ansprüchen 3 bis 7, **dadurch gekennzeichnet, dass** die wenigstens eine Antenne (1) durch wenigstens eine Spule gebildet wird.

## Claims

1. Animal recognition apparatus comprising a passage (14) and an antenna assembly arranged in the area of the passage and for emitting and/or receiving a signal to or respectively from a transponder, which is supported by an animal, wherein the antenna assembly has at least one antenna (1), which has at least one pair of portions (2, 3; 4, 5; 7, 8; 11, 12) spaced apart from one another, connected to each other and provided in a common surface, **characterized in that** in a longitudinal direction of one of the portions (2, 3; 4, 5; 7, 8; 11, 12) and seen in the longitudinal direction of the passage (14), a distance (A, B) between the portions (2, 3; 4, 5; 7, 8; 11, 12) is changeable, wherein the portions (2, 3, 4, 5, 7, 8, 11, 12) are arranged in a surface of the passage (14), the surface extending substantially in the perpendicular direction.

2. Animal recognition apparatus according to claim 1, **characterized in that** at least one pair of portions (2, 3, 4, 5, 7, 8, 11, 12) is provided, the distance (A) of which increases from a bottom of the passage (14) to the top.

3. Animal recognition apparatus according to claim 1 or 2**, characterized in that** at least one portion (2, 3) is attached to one side of the passage (14).

4. Animal recognition apparatus according to one or more preceding claims 1 to 3, **characterized in that** the distance (A) in the longitudinal direction of one of the portions (2, 3) changes continuously across at least one partial length of the portions (2, 3).

5. Animal recognition apparatus according to one of claims 1 to 4, **characterized in that** at least one of the portions (2, 3) is formed substantially lineally.

6. Animal recognition apparatus according to one of claims 1 to 5, **characterized in that** at least in one common surface there are provided at least two pairs of portions spaced apart from each other and connected with each other.

7. Animal recognition apparatus according to claim 6, **characterized in that** in the respective surface there is provided at least one pair, where the distance of the portions is different from the distance of the portions of at least another pair.

8. Animal recognition apparatus according to one or more preceding claims 3 to 7, **characterized in that** the at least one antenna (1) is formed by at least one coil.

## Revendications

1. Dispositif d'identification d'animaux avec un passage (14) et avec un ensemble d'antenne agencé dans la région du passage (14), pour émettre et/ou pour capter un signal jusqu'à un, respectivement à partir d'un transpondeur, qui est supporté par un animal, l'ensemble d'antenne ayant au moins une antenne (1) laquelle dispose au moins d'une paire de tronçons (2, 3 ; 4, 5 ; 7, 8 ; 11, 12) à distance les uns des autres et reliés les uns aux autres, et se trouvant dans une surface commune, **caractérisé en ce qu'**en une direction longitudinale d'un des tronçons (2, 3 ; 4, 5 ; 7, 8 ; 11, 12) et vu en direction longitudinale du passage (14), une distance (A, B) entre les tronçons (2, 3 ; 4, 5 ; 7, 8 ; 11, 12) peut être changée, les tronçons (2, 3 ; 4, 5 ; 7, 8 ; 11, 12) étant agencés dans une surface sensiblement verticale du passage (14).

2. Dispositif d'identification d'animaux selon la revendication 1, **caractérisé en ce qu'**au moins une paire de tronçons (2, 3, 4, 5, 7, 8, 11, 12) est prévue, dans le cas de laquelle la distance (A) augmente depuis un fond du passage (14) jusqu'en haut.

3. Dispositif d'identification d'animaux selon la revendication 1 ou 2, **caractérisé en ce qu'**au moins un tronçon (2, 3) est rapporté sur un coté du passage (14).

4. Dispositif d'identification d'animaux selon une ou plusieurs revendications précédentes 1 à 3, **caractérisé en ce que** la distance (A) est modifiée continuellement en direction longitudinale d'un des tronçons (2, 3) sur au moins une longueur partielle des tronçons (2, 3).

5. Dispositif d'identification d'animaux selon l'une des revendications 1 à 4, **caractérisé en ce qu'**au moins un des tronçons (2, 3) est réalisé sensiblement de façon rectiligne.

6. Dispositif d'identification d'animaux selon l'une des revendications 1 à 5**, caractérisé en ce que** dans au moins une surface commune au moins deux paires de tronçons sont prévues étant reliés à distance l'un par rapport à l'autre et l'un avec l'autre.

7. Dispositif d'identification d'animaux selon la revendication 6, **caractérisé en ce que** dans la surface respective au moins une paire est prévue, où la distance entre les tronçons est différente de la distance des tronçons d'au moins une autre paire.

8. Dispositif d'identification d'animaux selon l'une ou plusieurs revendications précédentes 3 à 7, **caractérisé en ce que** l'au moins une antenne (1) est formée par au moins une bobine.
